(19) Europäisches Patentamt / European Patent Office / Office européen des brevets

(11) **EP 2 725 321 B1**

(12) **FASCICULE DE BREVET EUROPEEN**

(45) Date de publication et mention
de la délivrance du brevet:
**15.04.2015 Bulletin 2015/16**

(51) Int Cl.:
***G01B 21/04*** *(2006.01)*

(21) Numéro de dépôt: **13187903.3**

(22) Date de dépôt: **09.10.2013**

(54) **Etalon métrologique bidimensionnel**

Zweidimensionales Eichmaß

Two-dimensional metrology standard

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.10.2012 FR 1260107**

(43) Date de publication de la demande:
**30.04.2014 Bulletin 2014/18**

(73) Titulaire: **COMMISSARIAT A L'ENERGIE
ATOMIQUE ET AUX
ENERGIES ALTERNATIVES
75015 Paris (FR)**

(72) Inventeur: **Manlay, Jean-François
46000 CAHORS (FR)**

(74) Mandataire: **Santarelli
49, avenue des Champs-Elysées
75008 Paris (FR)**

(56) Documents cités:
**WO-A1-91/03706      JP-A- 2006 329 694
US-A- 5 681 981      US-A1- 2004 066 508**

**Description**

L'invention concerne un étalon de métrologie bidimensionnel, c'est-à-dire un étalon pouvant servir de référence métrologique pour des longueurs (non parallèles) et/ou des angles (non nuls) coplanaires.

Domaine de l'invention

Le domaine d'application de cette invention concerne principalement la vérification métrologique et l'étalonnage d'instruments de mesure multidimensionnels tels que les machines à mesurer tridimensionnelles, avec ou sans contact, les machines à plateau rotatif, les bras poly-articulés ou encore les appareils de type laser tracker ou théodolites.

Problème général à résoudre

Il n'existe pas en métrologie dimensionnelle, d'étalons bi ou tridimensionnels directement raccordables à la définition du mètre. Tous les étalons connus sont unidimensionnels, c'est-à-dire qu'ils ne constituent une référence métrologique que dans une seule direction, ou pour une seule valeur dimensionnelle (dans le cas d'un cylindre).
Cela est particulièrement pénalisant pour la vérification des machines à mesurer multidimensionnelles.

Etat de l'art antérieur

La géométrie d'une machine à mesurer multidimensionnelle est généralement vérifiée à partir d'étalons unidimensionnels de types cales étalons ou cales à gradins, placées dans différentes positions dans l'espace de mesure. La série de normes ISO-10360 impose un certain nombre de mesures de distances (dites de tailles) dans différentes positions pour vérifier que l'écart maximum de mesure est inférieur à une spécification du constructeur. Cette procédure est très coûteuse en temps et en nombre d'étalons, et surtout ne permet qu'une vérification partielle de la géométrie. Si l'on souhaite vérifier plus complètement la géométrie, il faut multiplier le nombre de positions des cales, ou encore faire appel à l'utilisation d'un interféromètre et de niveaux électroniques.
Afin de simplifier le processus de vérification d'une machine à mesurer multidimensionnelle, certains assemblages d'étalons unidimensionnels ont été réalisés. Ils permettent ainsi d'effectuer un suivi de la géométrie de la machine en surveillant les dérives par rapport à un mesurage initial, mais ces montages n'associent pas les dimensions entre elles au sens métrologique (voir le document JP - 3427376 ou le document US - 2009/0082986, ou encore le dispositif appelé « sphere plate KOBA-check » de Kolb & Baumann GmbH & Co KG ou celui appelé « CMM Check » de Carl Zeiss Messtechnik GmbH). En fait, ces assemblages ont seulement l'avantage d'éviter que l'opérateur ait à disposer lui-même dans l'espace les différents étalons unidimensionnels. Mais les dimensions relatives entre les étalons unidimensionnels individuels ne permettent pas de relier, au sens métrologique, les longueurs et les angles. Au mieux, ces montages sont caractérisés sur des machines à mesurer réputées plus précises que celles sur lesquelles ils seront utilisés. Ces équipements permettent un suivi de l'évolution de la machine dans le temps, à l'aide de cartes de contrôle, par exemple, mais ne permettent pas de définir, en cas de dérive, le paramètre de la géométrie qui a fluctué.

Caractéristiques principales de l'étalon bidimensionnel

Le but de l'invention est de réaliser, à partir d'étalons unidimensionnels, un étalon bidimensionnel, c'est-à-dire un étalon de métrologie dans au moins deux directions d'un plan, en sorte de permettre, notamment, de mesurer, à des fins de calibration, non seulement des distances mais aussi des angles.
L'invention propose à cet effet de matérialiser un triangle dont les sommets et les angles sont accessibles à la mesure et dont les dimensions sont raccordées à la définition du mètre avec des incertitudes maîtrisées.
Il est rappelé que le fait de dire que des dimensions sont « raccordées à la définition du mètre » signifie que la chaîne des comparaisons ayant permis la réalisation de l'étalon utilisé est ininterrompue et tracée jusqu'à la référence même de la grandeur, et que les incertitudes associées sont déterminées.
L'invention se matérialise par un triangle dont les sommets sont représentés chacun par le centre d'un cercle mesuré sur un cylindre étalon à une hauteur donnée. Les écartements entre les cylindres sont définis par des cales étalons. L'ensemble est fixé sur une platine dont la planéité a été étalonnée. Ainsi, l'invention met en oeuvre plusieurs éléments connus en soi ; des cylindres étalon, dont le diamètre et le défaut de forme sont étalonnés, des cales étalons étalonnées, et une platine dont la planéité est également étalonnée. Les divers éléments précités sont alignés et les contacts sont assurés ; l'application des règles trigonométriques est ainsi valable.
Plus précisément, l'invention propose un étalon métrologique bidimensionnel comportant une pluralité de trois cylindres étalon ayant chacun un diamètre connu et une pluralité d'un même nombre de cales étalon ayant chacune une longueur connue, chaque cale étalon étant intercalée entre deux des cylindres étalon en sorte que ses faces extrêmes sont en contact avec les parois desdits deux cylindres étalon, l'ensemble des cylindres étalon et des cales étalon étant fixé à une platine plane en formant conjointement un triangle, chaque cylindre ayant un diamètre au plus égal à deux fois la largeur des cales étalon au contact desquelles il est placé, des règles d'appui et d'alignement longeant les cales étalon et les cylindres étalon en étant fixées à la platine.

Dans le contexte de l'invention, la notion de règle d'appui et d'alignement, indifféremment appelée règle d'appui ou règle d'alignement dans la suite, désigne un instrument ayant au moins une face plane par laquelle cet instrument longe la platine et une face plane (perpendiculaire à la première face) par laquelle cet instrument assure la fonction d'appui et d'alignement ; la surface extérieure de l'instrument peut être quelconque en dehors de ces deux faces, cet instrument ayant par exemple une section rectangulaire ou triangulaire ou en quart de cercle, constante ou non entre ses extrémités.

En conséquence d'un tel assemblage définissant un triangle (figure géométrique plane), l'étalon bidimensionnel permet le contrôle de dimensions suivant des directions différentes, ainsi que le contrôle d'angles (non nuls).

Comme indiqué, chaque cylindre doit avoir un rayon inférieur à la largeur (mesurée parallèlement à la platine) de chaque cale étalon avec laquelle il est en contact (cette largeur est en pratique normalisée), de manière à assurer que le contact du cylindre sur la cale s'effectue sur la face de mesure de cette dernière (voir ci-dessous) lorsque le cylindre est également en appui sur la règle d'alignement.

Les cylindres étalon ont avantageusement des diamètres nominaux égaux, de manière à simplifier les calculs trigonométriques.

L'intérêt que cet étalon comporte en outre des règles d'alignement est que cela permet de faire coïncider la droite passant par les centres des cercles (section des cylindres) avec la direction de mesure de la cale, tout en assurant d'autre part une certaine rigidité de l'assemblage final.

Les cales étalon ont de préférence, parallèlement à la platine, des largeurs égales (il s'agit le plus souvent de largeurs normalisées).

Les cylindres étalon et les cales étalon sont fixés à la platine au moyen d'éléments de serrage traversant avantageusement avec jeu ces cylindres étalon et ces cales étalon ; il peut ainsi s'agir de vis de serrage vissées dans la platine ; en variante ces éléments de fixation peuvent être des boulons traversant avec jeu à la fois ces étalons élémentaires et la platine ; ces jeux contribuent à faciliter l'assemblage des divers éléments, mais sont supprimés après la fixation (en pratique par serrage).

Il va de soi que, la forme de l'étalon étant triangulaire, la platine support de l'étalon aura avantage à l'être également (éventuellement avec des coins coupés) afin de limiter la masse de l'ensemble.

De manière avantageuse, cette platine est munie d'au moins une poignée, ce qui en facilite la manipulation ; toutefois, cette platine doit posséder un côté pouvant être placé sur sa tranche dans le cas où l'on prévoit que l'étalon bidimensionnel puisse être disposé verticalement (la possibilité de disposer l'étalon horizontalement et verticalement a l'avantage de permettre que cet étalon bidimensionnel puisse être utilisé pour l'étalonnage en trois dimensions d'une machine à mesurer tridimensionnelle).

Description détaillée

Des objets, caractéristiques et avantages de l'invention ressort de la description qui suit, donnée à titre d'exemple illustratif non limitatif, en regard des dessins sur lesquels :

- La figure 1 est un schéma d'un étalon métrologique bidimensionnel conforme à l'invention,
- La figure 2 en représente, en perspective, un exemple de réalisation,
- La figure 3 est un schéma représentant une première étape du procédé de montage de l'étalon de la figure 1,
- La figure 4 est un schéma montrant l'erreur découlant d'une inclinaison (en vue de dessus) d'une cale étalon par rapport à la ligne reliant les centres de deux sections respectives de deux cylindres étalon séparés par cette cale étalon,
- La figure 5 est un schéma montrant l'effet, sur la configuration de la figure 4, de la présence d'une règle d'appui et d'alignement le long d'une cale étalon,
- La figure 6 est un schéma montrant l'erreur découlant d'un défaut de perpendicularité (en vue de côté) des faces de mesure d'une cale étalon par rapport à la paroi des cylindres étalon,
- La figure 7 est un schéma montrant l'erreur d'un défaut de perpendicularité (en vue de dessus) des faces de mesure d'une cale étalon par rapport à la cale adjacente,
- La figure 8 est un schéma montrant l'erreur découlant d'un défaut de perpendicularité (en vue de côté) de la paroi des cylindres étalon par rapport à leurs faces planes, et
- La figure 9 est un schéma simplifié d'un triangle matérialisé par un dispositif conforme à l'invention, selon une autre configuration.

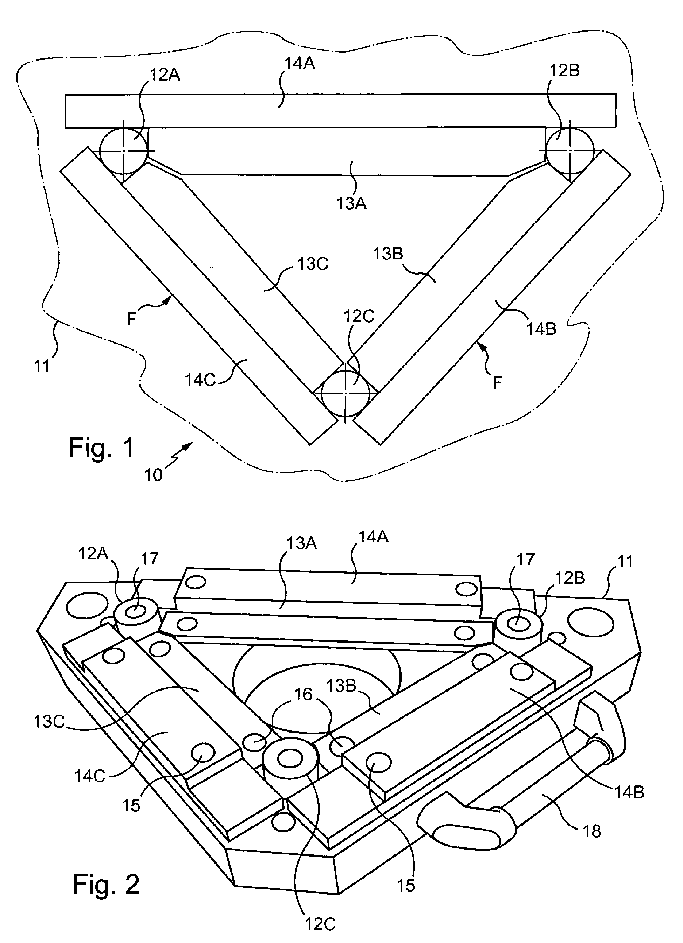

La figure 1 représente de manière schématique un étalon métrologique bidimensionnel conforme à l'invention, noté 10 dans son ensemble. Dans cet exemple de réalisation, l'étalon a une forme générale d'un triangle.

Cet étalon comporte des étalons élémentaires et des règles d'appui et d'alignement reliées à une platine 11 par des éléments de fixation (non représentés sur cette figure) ; les étalons élémentaires comportent ici trois cylindres étalon 12A, 12B et 12C et trois cales étalon 13A, 13B et 13C ; les règles d'appui sont dans un nombre égal à celui des cales étalon (et à celui des cylindres étalon), à savoir trois, et sont notées 14A, 14B et 14C.

Les cylindres étalon 12A à 12C constituent les sommets d'un triangle dont les côtés sont matérialisés par les cales étalon 13A à 13C, dont chaque extrémité vient en contact avec le cylindre adjacent, par sa face de mesure (c'est à dire sa face ou tranche extrême) ; chaque règle d'appui 14A, 14B ou 14C est en contact à la fois avec une cale étalon et avec chacun des cylindres étalon entre lesquels cette cale étalon est située. Le fait d'établir un contact entre les faces de mesure d'une cale étalon et les parois des cylindres étalon adjacents tend à réaliser une dimension représentant idéalement la somme des dimensions élémentaires, avec les incertitudes, pouvant découler d'éventuels défauts de géométrie, qui seront analysées plus loin.

Les étalons unidimensionnels 12A à 12C, 13A à 13C, raccordés à la définition du mètre, sont ainsi disposés en triangle de façon à pouvoir relier les distances et les angles entre eux ; ils constituent ainsi un étalon matérialisé bidimensionnel. Ses incertitudes sont calculées à partir des incertitudes d'étalonnage de chacun des éléments constitutifs. Le calcul est basé sur l'application de règles de trigonométrie associées à la géométrie du triangle. Pour chacun des côtés du triangle formé, la longueur du côté est déterminée par une composition des rayons des deux cylindres extrêmes, de la longueur d'une cale étalon, et de l'alignement de ces trois éléments. Cette notion d'alignement signifie ici que la distance entre les tangentes aux cylindres est exprimée le long de la normale aux faces de mesure de la cale étalon.

On comprend que la forme en triangle est la forme la plus simple permettant de définir des dimensions et des angles dans un plan et donc la forme la plus simple pour former un étalon bidimensionnel.

Les cylindres étalon ont de préférence des diamètres égaux ; de manière encore plus avantageuse, ils ont des géométries identiques (c'est-à-dire qu'ils ont en outre des hauteurs égales).

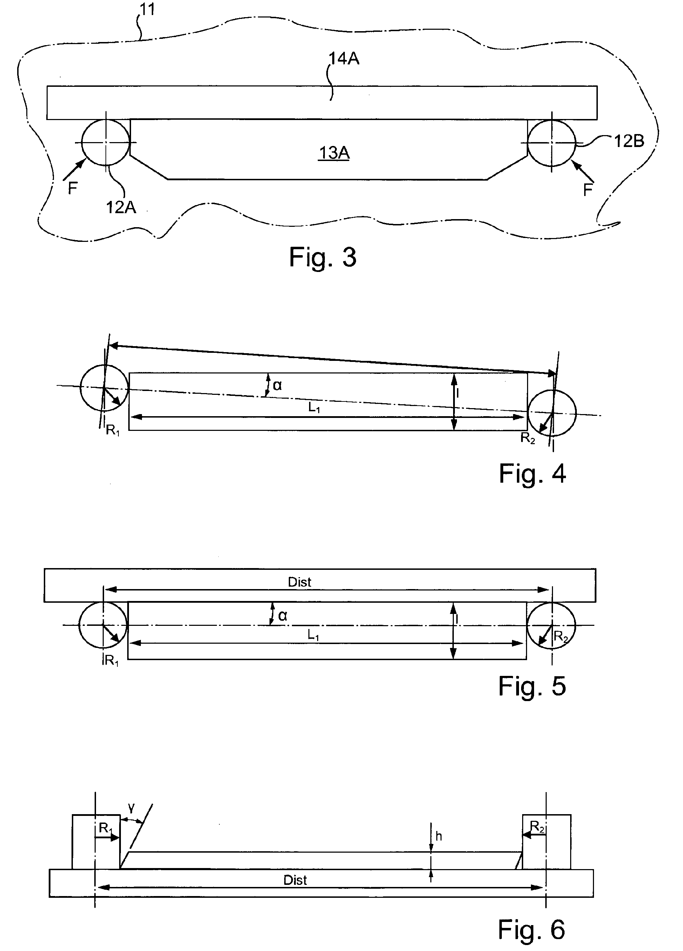

Lorsque l'on choisit des cylindres étalon dont le diamètre est sensiblement inférieur à la largeur d'une cale étalon classique, il peut être nécessaire de prévoir un chanfrein auprès des extrémités, ainsi que cela ressort de la figure 1, auprès des cylindres étalon 12A et 12B (voir aussi la figure 3) ; cela permet d'éviter un contact des cales étalon entre elles, même lorsqu'elles définissent conjointement un angle très aigu, tout en assurant la tangence de chacune d'entre elles avec le cylindre adjacent.

Il est toutefois possible de faire réaliser des cales étalons ayant une géométrie spécifique (section cylindrique ou polygonale), la seule contrainte sur la géométrie étant la possibilité d'étalonner la distance entre les faces de mesure de manière à minimiser l'incertitude sur la longueur.

La fixation des étalons unidimensionnels et des règles d'appui et d'alignement à la platine est assurée par exemple par des boulons traversant des alésages des étalons et de la platine avec des jeux suffisants pour permettre un débattement significatif, typiquement de quelques millimètres, tant que ces boulons ne sont pas serrés (après le serrage, plus aucun mouvement n'est possible) ; en variante, cette fixation est assurée par des vis de serrage traversant avec jeu des alésages des cales et étalons, et coopérant avec des taraudages formés dans la platine, ou dans des implants solidaires de la platine.

La platine est par exemple dans un matériau de grande rigidité et de grande stabilité dimensionnelle, tel que du granit et les alésages peuvent être formés par des implants cylindriques taraudés et collés en sorte d'être lié rigidement à la platine. De même les règles d'appui 14A à 14C sont avantageusement réalisées dans un matériau analogue à celui de la platine, ici du granit.

On voit ainsi sur la figure 2 que la platine 11 a une forme globalement triangulaire avec des coins coupés, que les règles d'appui 14A à 14C lui sont fixées au moyen, chacune, de deux vis de serrage 15 ; de même, chaque cale étalon est fixée à la platine au moyen de deux vis 16 et les cylindres sont chacun fixés à la platine au moyen d'une vis 17.

Dans l'exemple représenté, la platine, et donc l'ensemble de l'étalon bidimensionnel, est munie d'au moins d'une poignée 18, destinée à faciliter sa manipulation. Dans l'exemple ici représenté, il y a deux poignées, suivant deux côtés de l'étalon bidimensionnel ; cela laisse libre le troisième côté pour que l'étalon puisse être placé verticalement sur une platine d'une machine de mesure (il suffit pour cela que la platine ait une tranche suffisamment épaisse pour permettre un tel placement vertical).

Assemblage des étalons unidimensionnels

L'assemblage des étalons 12A à 12C, 13A à 14C sur la platine en granit 11 doit être effectué avec soin, afin de ne pas générer de déformation et d'assurer les différents contacts. Il doit notamment être réalisé après stabilisation thermique des éléments constitutifs. Dans le cas d'une utilisation en température variable, les matériaux constitutifs devront avoir des coefficients de dilatation proches les uns des autres (par exemple à pas plus de 20% près).

L'assemblage peut être effectué de la manière suivante.

Il débute par une mise en place approximative de tous les éléments et de leurs vis de serrage.

Pour réaliser l'assemblage final, on commence par assembler une cale étalon et deux cylindres le long d'une règle en granit, et de serrer chaque élément (*cf.* figure 3, à propos de la cale 13A, des cylindres 12A et 12B et de la règle 14A, mais sans représentation des moyens de serrage).

Pour commencer, la règle en granit 14A est solidarisée à la platine, par serrage des moyens de fixation ; on solidarise ensuite à la platine, par serrage également, la cale étalon 13A après s'être assuré qu'elle longe, avec un contact continu, la cale en granit ; c'est ensuite qu'on solidarise à la platine, par serrage, les deux cylindres, l'un après l'autre. Afin d'assurer un bon contact entre les cylindres et la cale, l'assembleur doit exercer un léger effort sur chaque cylindre, dans le sens des flèches F (voir la figure 1).

Il est possible, du fait du jeu avec lequel les vis de serrage sont engagées dans les alésages des cylindres, que celles-ci ne soient pas concentriques à ces cylindres, mais cela ne gêne pas la fonction métrologique de l'ensemble final.

L'assemblage se poursuit par une mise en contact des deux autres cales étalon 13B et 13C avec les cylindres étalons 12A et 12B, et avec les règles d'appui 14B et 14C, tout en s'assurant que les cales longent avec un bon contact ces règles ; cette mise en contact se fait d'abord sans serrage des vis de serrage.

Cette étape est relativement délicate, puisque il faut mettre en place le $3^{ème}$ cylindre en assurant 4 points de contact (à savoir les contacts avec les deux cales 13B et 13C et les règles 14B et 14C), ce qui peut paraître hyperstatique, si l'on assimile la partie basse du cylindre (lieu des contacts) à un cercle. L'assembleur exerce un léger effort sur les cales en granit (flèches F), tout en assurant le contact des cales étalon sur celles-ci. Dès lors que le contact est assuré, l'assembleur procède au serrage du cylindre 12C puis au serrage des cales de granit 14B et 14C, et éventuellement les cales étalon (mais cela n'est pas encore nécessaire, voir ci-dessous).

Lorsque l'ensemble est ainsi assemblé, on vérifie (par exemple à l'aide d'un aimant et d'un palpeur à levier), que le jeu longitudinal des cales est nul. Si les cales ont été serrées lors de l'étape précédente, cette vérification est effectuée après desserrage de ces cales ; celles -ci sont serrées après ce contrôle ; tous les éléments constitutifs de l'étalon bidimensionnel sont alors rigidement fixés à la platine, donc entre eux.

A titre d'exemple, un prototype forme un triangle isocèle rectangle et comporte des cylindres étalon de mêmes diamètres (ils sont même identiques, avec des hauteurs égales et constituées de mêmes matériaux).

Si les cales étalon ont des longueurs notées $L_1$, pour l'un, et $L_2$, pour les deux autres, alors que le rayon des cylindres est noté R, ces dimensions satisfont donc le théorème de Pythagore, c'est-à-dire que :

$$[L_1 + 2R]^2 = 2 \times [L_2 + 2R]^2$$

Les diamètres possibles (D=2R) sont donc :

$$D_1 = L_1(1 - \sqrt{2}) + L_2(\sqrt{2} - 2)$$
$$D_2 = L_1(1 + \sqrt{2}) - L_2(\sqrt{2} + 2)$$

Dans le cas de l'utilisation de cales étalon standards, de largeur 35 mm, le diamètre retenu doit donc être sensiblement inférieur à 70 mm, afin d'assurer un contact radial (cela exprime la condition précitée selon laquelle le rayon des cylindres doit être au plus égal à la largeur des cales).

La rectification des angles des cales étalon au sein de l'étalon bidimensionnel doit être envisagée en fonction des longueurs et des diamètres effectivement retenus.

Toutefois, l'utilisation proposée de la platine plane (ou équerre) est valable avec toute sorte de triangle, rectangle ou non. La seule contrainte reste d'adopter un diamètre de cylindre inférieur à 70 mm, tant que l'on utilise des cales étalon classiques de 35 mm de large.

Ainsi, on peut envisager un étalon bidimensionnel ayant la forme d'un triangle équilatéral ; la condition selon laquelle le rayon des cylindres étalon doit, de préférence, être inférieur à la largeur des cales se traduit par la condition que le rayon des cylindres doit être supérieur à 22.189 mm, tout en restant inférieur à 35 mm (à savoir la largeur des cales étalon classiques) de manière à éviter tout contact entre les cales auprès des cylindres étalon. On comprend aisément qu'il s'agit d'un assemblage particulièrement intéressant, puisqu'il ne nécessite pas de rectification des cales, mais aussi du point de vue exploitation (des angles théoriquement égaux peuvent ainsi être mesurés dans des configurations différentes).

Pour chacun des côtés du triangle formé, la longueur du côté est donnée par la composition des rayons des deux cylindres étalon extrêmes, de la longueur de la cale étalon, et de l'alignement de ces trois éléments.

La figure 4 représente le cas où la cale a une direction longitudinale formant un angle $\alpha$ non nul avec la ligne passant par les centres de section des deux cylindres de rayons R1 et R2 : la distance « Dist » entre les centres des deux cercles peut alors s'écrire :

$$Dist = (R_1 + R_2)\sqrt{1 + tg^2\alpha} + \frac{L_1}{cos\,\alpha}$$

Si l'on fait tendre R1 vers R2, on obtient une valeur de $\alpha$ ci-dessous :

$$si\ R_1 \longrightarrow R_2\ alors\ \alpha = Atn\frac{R_2 - R_1}{L_1 + R_1 + R_2} \longrightarrow 0$$

Et la distance Dist vaut, lorsque R1 tend vers R2 :

$$Dist = (R_1 + R_2)\sqrt{1 + tg^2\alpha} + \frac{L_1}{cos\alpha} \longrightarrow R_1 + R_2 + L_1$$

Dès lors que les trois côtés du triangle sont définis en longueur, le calcul des angles aux sommets est accessible, quel que soit le type de triangle formé (rectangle, isocèle, équilatéral ou même quelconque).

Prise en compte des défauts des étalons

Les incertitudes sur les côtés du triangle se définissent aisément à partir des incertitudes existant sur les éléments métrologiques élémentaires constituant l'étalon bidimensionnel.

Les tolérances de défaut associées aux étalons sont définies dans la norme NF EN ISO 3650. Ces défauts interviennent soit dans le calcul de correction de longueur, soit dans le calcul de l'incertitude, ainsi que cela ressort des commentaires ci-dessous.

*Alignement des cylindres par rapport à une cale intercalaire*

La distance entre les centres de deux cylindres est théoriquement égale à la somme de la longueur de la cale étalon les séparant et des rayons de chacun des deux cylindres concernés (voir ci-dessus). Cette définition n'est valable que si les points de contact sur la cale étalon sont alignés suivant une perpendiculaire à la face de mesure de la cale étalon (c'est-à-dire sa tranche extrême), et que le contact est assuré. Afin d'aligner les cylindres et la cale étalon, une règle en granit permet d'assurer la tangence des trois éléments ; la figure 5 permet de comprendre que le fait d'aligner la cale considérée le long d'une règle d'alignement ou d'appui (telle que les règles 14A, 14B ou 14C) tout en assurant un contact de cette règle avec les cylindres a pour avantage de réduire l'écart angulaire à près de zéro lorsque les rayons des cylindres sont égaux.

Le défaut de forme de chaque cale (les tranches extrêmes de chaque cale étalon sont réputées parallèles, et perpendiculaires aux faces latérales) et l'incertitude sur ces défauts interviennent aussi dans l'incertitude sur la longueur du côté du triangle.

*Perpendicularité des faces d'une cale étalon*

Les deux faces de mesure d'une cale étalon sont réputées parallèles, le défaut de parallélisme étant inclus dans la valeur étalonnée (5 points de mesure par face, 5 distances point à point). Les faces latérales, qui servent pourtant à orienter la cale, sont faiblement contraintes en perpendicularité par rapport aux faces de mesure. Cela entraîne deux écarts possibles sur le calcul de distance centre à centre de deux cercles, selon la perpendicularité étudiée.

La figure 6 schématise le cas où les faces extrêmes d'une cale donnée ne sont pas exactement parallèles à la génératrice des cylindres avec lesquels cette cale est en contact ($\gamma$ représente l'écart angulaire entre ces tranches et ces parois ; il est supposé que les faces extrêmes de la cale étalon sont parallèles et présentent le même écart $\gamma$ par rapport aux parois des cylindres ; la distance entre les centres des cylindres est alors :

$$Dist = R_1 + R_2 + \frac{L_1}{cos\gamma} + 8{,}5 \times tg\gamma$$

$$\gamma = Atg\left(\frac{d\acute{e}faut\ mesur\acute{e}}{L_1}\right)$$

A titre d'exemple, pour une cale de 250 mm, $y_{mm}$ = 5.6 10⁻⁴ rad ; pour un défaut de perpendicularité de 140 $\mu$m (valeur max), l'écart de distance induit par ce défaut peut être évalué à $\Delta_{Dist}$ = 9,56 $\mu$m (la valeur de 8.5 mm mentionnée ci-dessus correspond à la hauteur de la face de mesure de la cale étalon (rayons d'arête retranchés) - voir norme NF EN ISO 3650 : 1999 - 03 figure 6.

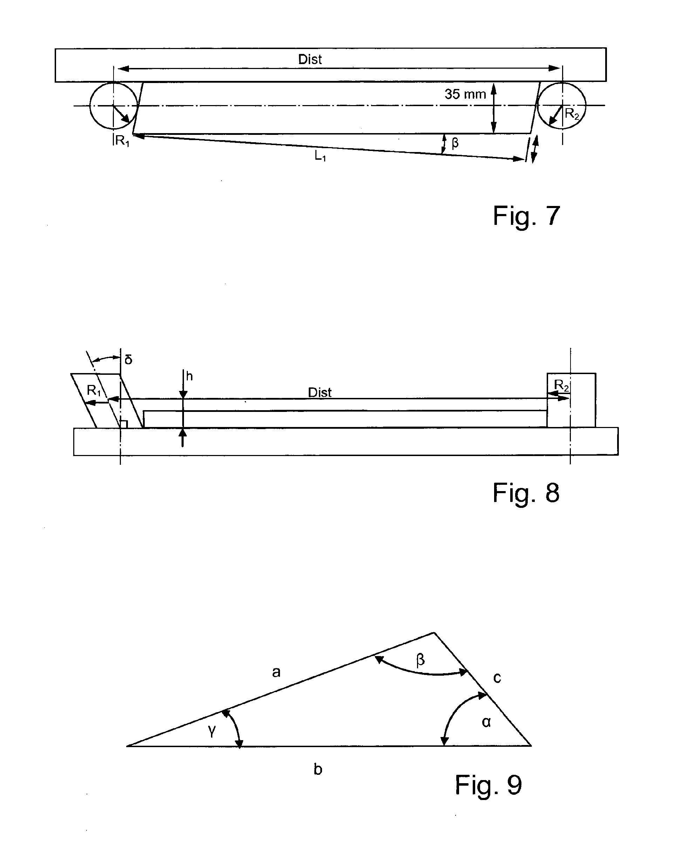

La figure 7 représente un autre cas où les faces extrêmes d'une cale donnée ne sont pas exactement perpendiculaires à une direction reliant les centres des cylindres ; plus précisément, ces faces sont ici tangentes à la paroi des cylindres avec lesquels cette cale est en contact mais en présentant une inclinaison autour d'une direction parallèle aux axes des cylindres ; cette inclinaison, identique pour les deux tranches, est notée β (il est supposé, comme précédemment, que les faces extrêmes de la cale étalon sont parallèles et présentent le même écart) ; la distance « Dist » entre les centres des cylindres est alors :

$$Dist = \frac{R_1 + L_1 + R_2}{cos\ \beta}$$

$$\beta = Atg\left(\frac{d\acute{e}faut\ mesur\acute{e}}{L_1}\right)$$

A titre d'exemple, pour une cale de 250 mm $\beta_{max}$ = 5.6 10⁻⁴ rad et

$$\beta = Atg\left(\frac{d\acute{e}faut\ mesur\acute{e}}{L_1}\right)$$

(Voir norme NF EN ISO 3650 : 1999 - 03, figure 6).

Etant donné que les deux défauts peuvent coexister, la correction à calculer s'écrit sous la forme :

$$Dist = \frac{R_1 + R_2 + \dfrac{L_1}{cos\gamma} + 8{,}5 \times tg\gamma}{cos\beta}$$

*Défaut de perpendicularité de l'axe de l'un des cylindres par rapport à sa base*

L'axe d'un cylindre étalon est théoriquement perpendiculaire à la face d'appui du cylindre sur la platine. En réalité, un défaut angulaire est possible (noté $\delta$) ; Dans le contexte d'utilisation des cylindres, ce défaut engendre une variation possible de la distance centre à centre de deux cercles mesurés sur les cylindres, directement dépendante de la hauteur de mesure du cercle par rapport à la base. Du fait d'une telle erreur, la distance « Dist » entre les centres s'écrit :

$$Dist = R_1 + h \times tg\delta + R_2 + L_1$$

$$\delta = Atg\left(\frac{d\acute{e}faut\ mesur\acute{e}}{hauteur\ de\ mesure}\right)$$

Compte tenu de l'orientation aléatoire des cylindres en rotation, l'écart calculé sur la distance est assimilé à une incertitude de mesure.

*Défaut de planéité de la face supérieure de la platine*

Un défaut de planéité de la surface supérieure de la platine au niveau des appuis des cylindres engendre des écarts sur la distance « Dist » centre à centre du même type que le défaut de perpendicularité ci-dessus. L'écart sur la distance est considéré comme étant maximal si le défaut de planéité est intégralement représenté entre le centre du cylindre et son bord, soit sur une distance égale au rayon. Dans ce cas, l'angle $\delta_2$ doit être ajouté à l'angle $\delta$ dans le calcul d'écart. Il entre également dans l'incertitude de mesure.

$$Dist = R_1 + h \times tg(\delta + \delta_2) + R_2 + L_1$$

$$\delta_2 = Atg\left(\frac{défaut\ mesuré}{rayon\ du\ cylindre}\right)$$

Lorsque le défaut de planéité agit sur l'orientation de la cale, le calcul est équivalent au premier défaut de perpendicularité calculé.

Calcul des angles

Les angles aux sommets sont calculés à l'aide de la formule ci-dessous (cf. fig. 9), puis par permutation circulaire. L'incertitude sur les angles est obtenue par la méthode de Monte-Carlo, en faisant varier chaque longueur de côté du triangle dans son domaine d'incertitude, estimé à l'aide des valeurs d'étalonnage des étalons et des hypothèses énumérées ci-dessus.

$$sin\alpha = \frac{2\sqrt{s(s-a)(s-b)(s-c)}}{bc}$$

*avec s demi - périmètre du triangle :*

$$s = \frac{(a+b+c)}{2}$$

Les résultats obtenus sur le montage prototype défini ci-dessus, avec des cylindres de diamètre égal à 41,421 mm (nominal) et de hauteur égale à 25 mm, et des cales de largeur égale à 35 mm, de hauteur égale 9 mm et de longueurs respectives égales à 200 et 300 mm donnent des incertitudes sur les longueurs de l'ordre de $\pm$ 3 $\mu$m et de l'ordre de $\pm 3''$ d'art pour les angles (k=2).

En utilisant des longueurs de cales standards et des cylindres identiques, pour réaliser un triangle rectangle isocèle, on peut associer les longueurs et diamètres suivants (non exhaustif, à titre d'exemple) :

- une cale de 50 mm, deux cales de 25 mm et 3 cylindres de 35,355 mm,
- une cale de 200 mm, deux cales de 125 mm et 3 cylindres de 50,066 mm.

La première solution est sans doute la plus petite réalisation possible pour un triangle rectangle isocèle. Le prototype réalisé ici est sans doute le modèle maximal réalisable avec des tailles de cales classiques.

Dès lors que l'on réalise un triangle équilatéral, les dimensions du triangle peuvent être quelconques, tout en conservant des cylindres de rayon compris entre 22,189 mm et 35 mm. Ce qui limitera la taille dans cette configuration sera la rigidité de la platine support et la masse de l'ensemble, qui doit rester aisément manipulable.

Procédé d'étalonnage d'une machine à mesurer à l'aide d'un étalon bidimensionnel

Un exemple de mise en oeuvre de l'invention est la vérification de la géométrie d'une machine à mesurer (ou d'un autre instrument de mesure multi dimensionnel) ; cette mise en oeuvre peut consister à mesurer un plan, afin de dégauchir numériquement le montage, puis à mesurer 3 cercles parallèlement à ce plan (c'est-à-dire des cercles définis sur la paroi des cylindres). Il est alors possible de définir les distances entre les centres et les angles entre les côtés du triangle formé.

Si le montage est placé à l'horizontale sur la machine en alignant un côté sommairement sur un axe machine, cela permet de vérifier la justesse globale de deux axes perpendiculaires entre eux (par exemple X et Y de la machine) et la perpendicularité des axes entre eux. En effectuant un second placement de l'étalon bidimensionnel à une hauteur différente, on obtient une image du défaut global de roulis, de l'axe Z dans le cas présent (nota : le roulis représente l'évolution de la perpendicularité de deux axes mesurée le long du troisième).

L'étalon de l'invention proposée peut également être posé verticalement, ce qui permet d'orienter le dispositif dans différents plans de mesure. Ainsi, à l'aide de trois opérations de placement de l'étalon, on peut vérifier l'ensemble des défauts de justesse et de perpendicularité de la machine. Avec trois placements complémentaires, on obtient les valeurs de roulis, de tangage et de lacet. Le gain de temps pour un contrôle complet est donc très important, tout en gardant un niveau d'incertitudes de mesure très faible.

## Revendications

1. Etalon métrologique bidimensionnel (10) comportant une pluralité de trois cylindres étalon (12A-12C) ayant chacun un diamètre connu et une pluralité d'un même nombre de cales étalon (13A-13C) ayant chacune une longueur connue, chaque cale étalon étant intercalée entre deux des cylindres étalon en sorte que ses faces extrêmes sont en contact avec les parois desdits deux cylindres étalon, l'ensemble des cylindres étalon et des cales étalon étant fixé à une platine plane (11) en formant conjointement un triangle, chaque cylindre ayant un diamètre au plus égal à deux fois la largeur des cales étalon (13A, 13B, 13C) au contact desquelles il est placé, des règles d'appui et d'alignement (14A, 14B, 14C) longeant les cales étalon et les cylindres étalon en étant fixées à la platine.

2. Etalon selon la revendication 1, dans lequel les cylindres étalon (12A, 12B, 12C) ont des diamètres égaux.

3. Etalon selon la revendication 1 ou la revendication 2, dans lequel les cales étalon ont, parallèlement à la platine, des largeurs égales.

4. Etalon selon l'une quelconque des revendications 1 à 3 dans lequel les cylindres étalon et les cales étalon sont fixés à la platine au moyen d'éléments de serrage (16, 17) traversant avec jeu ces cylindres étalon et ces cales étalon.

5. Etalon selon l'une quelconque des revendications 1 à 4, dont la platine (11) est triangulaire.

6. Etalon selon l'une quelconque des revendications 1 à 5 dont la platine est munie d'au moins une poignée (18).

## Patentansprüche

1. Zweidimensionales Messnormal (10) mit einer Mehrzahl von drei Zylinderendmaßen (12A-12C), die jeweils einen bekannten Durchmesser aufweisen, und einer Mehrzahl von Parallelendmaßen (13A-13C) in der gleichen Anzahl, die jeweils eine bekannte Länge aufweisen, wobei jedes Parallelendmaß zwischen zweien der Zylinderendmaße angeordnet ist, so dass seine Stirnflächen in Kontakt mit den Wänden der zwei Zylinderendmaße angeordnet sind, wobei alle Zylinderendmaße und Parallelendmaße an einer ebenen Platte (11) befestigt sind und ein Dreieck bilden, wobei jeder Zylinder einen Durchmesser von höchstens gleich dem Zweifachen der Breite der Parallelendmaße (13A, 13B, 13C), mit denen er in Kontakt steht, aufweist, wobei Anschlag- und Ausrichtungslineale (14A, 14B, 14C) entlang der Parallelendmaße und Zylinderendmaße verlaufen und an der Platte befestigt sind.

2. Normal nach Anspruch 1, wobei die Zylinderendmaße (12A, 12B, 12C) gleiche Durchmesser aufweisen.

3. Normal nach Anspruch 1 oder Anspruch 2, wobei die Parallelendmaße parallel zu der Platte gleiche Breiten aufweisen.

4. Normal nach einem der Ansprüche 1 bis 3, wobei die Zylinderendmaße und die Parallelendmaße an der Platte mittels Klemmelementen (16, 17) befestigt sind, die durch diese Zylinderendmaße und diese Parallelendmaße mit Spiel hindurchgehen.

**5.** Normal nach einem der Ansprüche 1 bis 4, wobei die Platte (11) dreieckig ist.

**6.** Normal nach einem der Ansprüche 1 bis 5, wobei die Platte mit mindestens einem Griff (18) versehen ist.

**Claims**

**1.** A two-dimensional metrological calibration standard (10) comprising a plurality of three calibration cylinders (12A-12C) each having a known diameter and a plurality of the same number of calibration gauge blocks (13A-13C) each having a known length, each calibration gauge block being interposed between two of the calibration cylinders such that its end faces are in contact with the walls of said two calibration cylinders, the calibration cylinders and calibration gauge blocks as a group being fastened to a flat plate (11) and conjointly forming a triangle, each cylinder having a diameter at most equal to twice the width of the calibration gauge blocks (13A, 13B, 13C) in contact with which it is placed, bearing and alignment rulers (14A, 14B, 14C) extending alongside the calibration gauge blocks and the calibration cylinders and being fastened to the plate.

**2.** A calibration standard according to claim 1, wherein the calibration cylinders (12A, 12B, 12C) are of equal diameter.

**3.** A calibration standard according to claim 1 or claim 2, wherein the calibration gauge blocks have equal widths parallel to the plate.

**4.** A calibration standard according to any one of claims 1 to 3 wherein the calibration cylinders and the calibration gauge blocks are fastened to the plate by means of clamping members (16, 17) passing through those calibration cylinders and those calibration gauge blocks with clearance.

**5.** A calibration standard according to any one of claims 1 to 4, of which the plate (11) is triangular.

**6.** A calibration standard according to any one of claims 1 to 5 of which the plate is provided with at least one handle (18).

Fig. 1

Fig. 2

Fig. 3

Fig. 4

Fig. 5

Fig. 6

Fig. 7

Fig. 8

Fig. 9

**EP 2 725 321 B1**

## RÉFÉRENCES CITÉES DANS LA DESCRIPTION

**Documents brevets cités dans la description**

- JP 3427376 B

- US 20090082986 A